# FASCICULE DE BREVET EUROPEEN

(11) **EP 0 430 729 B1**
(45) Date de publication et mention de la délivrance du brevet: **01.09.1993**
(21) Numéro de dépôt: 90403066.5
(22) Date de dépôt: 30.10.1990
(51) Int. Cl.: B60T 8/18

(54) **Circuit de commande d'un correcteur de freinage à commande fluidique**
Steuerkreis für hydraulisch gesteuertes Bremsmaterial
Control circuit for brake proportioning valve controlled by fluid

(30) Priorité: 30.11.1989 FR 8915771
(43) Date de publication de la demande: 05.06.1991
(73) Titulaire: ALLIEDSIGNAL EUROPE SERVICES TECHNIQUES, 93700 Drancy (FR)
(72) Inventeur: Castel, Philippe, Bendix Europe Services Techn., F-93700 Drancy (FR)
(74) Mandataire: Bentz, Jean-Paul

(56) Documents cités:
- DE-A- 2 701 003
- DE-A- 3 444 416
- DE-A- 3 702 732
- DE-A- 3 727 099

## Description

La présente invention concerne un circuit de commande d'un correcteur de freinage à commande fluidique en fonction de la charge d'un véhicule comportant au moins deux roues pourvues chacune d'un élément de suspension.

On connaît de EP-A-0 223 641 un correcteur de freinage à commande fluidique auquel on pourra se référer notamment quant au fonctionnement d'un tel correcteur.

On connaît également de EP-A-0 283 328 un capteur de pression fluidique coopérant avec un élément de suspension pour commander un correcteur freinage.

On connaît de GB-A-1 542 507 un ensemble de commande d'un correcteur de freinage à commande mécanique en fonction de la charge appliquée à une roue d'un véhicule et corrigée pneumatiquement en fonction de l'assiette du véhicule. Cet ensemble est relativement complexe, donc coûteux à réaliser et à monter sur un véhicule. En outre la correction du freinage est fonction de la charge appliquée à une seule roue choisie arbitrairement. Or cette roue n'est pas nécessairement celle qui est critique pour effectuer la correction de freinage. En effet, en cas de répartition non équilibrée des charges à l'arrière du véhicule, ou bien en cas de report dynamique partiel de charge d'un côté du véhicule sur l'autre - ce qui est le cas lorsque celui-ci vire - l'information fournie au correcteur peut alors être représentative du demi-essieu sur lequel s'exerce la charge la plus importante, ou le report de charge. La correction de freinage appliquée sur l'autre roue correspond alors à une charge supérieure à la charge réelle. On prend ainsi le risque de bloquer la roue la plus faiblement chargée à moins de décaler les points d'intervention d'une valeur égale à l'amplitude du risque potentiel, ce qui entraîne une baisse importante de l'efficacité du freinage sur l'essieu arrière. On obtient donc ainsi une correction qui n'est toujours la meilleure correction qui soit.

On connaît enfin de DE-A-3 444 416 un circuit de commande d'un correcteur de freinage en fonction de la charge d'un véhicule comportant au moins deux roues pourvues chacune d'un élément de suspension. Les éléments de suspension coopèrent chacun avec un capteur de pression fluidique, et ces capteurs sont relies entre eux et à un dispositif de commande du correcteur. Dans ce circuit, en cas d'oscillations asymétriques des éléments de suspension, un volume additionnel de fluide hydraulique est prélevé d'un réservoir de façon à ce que ces oscillations n'aient pas d'influence sur le dispositif de commande du correcteur.

La présente invention a pour but d'obvier à ces inconvénients.

Selon l'invention, chaque élément de suspension des roues coopère avec un capteur de pression fluidique, et les capteurs de pression sont reliés entre eux et au correcteur. Chaque capteur comporte une chambre à volume variable entre une valeur sensiblement nulle et une valeur déterminée maximale, et le circuit est empli d'un volume de fluide tel que le volume de la chambre de l'un des capteurs soit sensiblement égal à la valeur maximale précitée lorsque celui des autres capteurs est nul, de manière à commander le correcteur en fonction de la charge supportée par l'une seulement des roues, celle supportant la charge la plus légère.

L'invention sera mieux comprise et d'autres but, avantages et caractéristiques apparaîtront plus clairement à la lecture de la description qui suit d'un mode de réalisation préféré donné à titre non limitatif et à laquelle une planche de dessin est jointe sur laquelle :

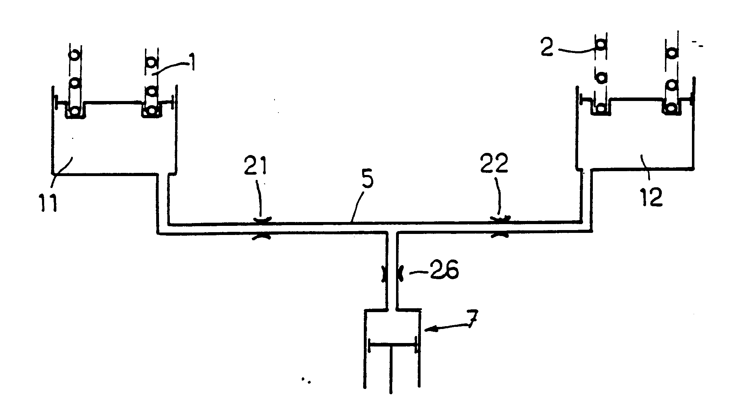

La Figure Unique représente schématiquement un circuit selon l'invention.

En référence maintenant à cette Figure, des éléments de suspension 1, 2 appuient chacun sur un coussin fluidique 11, 12. Ces coussins peuvent affecter une forme torique ou toute autre forme appropriée à leur fonction consistant à convertir la force qui leur est appliquée en une pression de fluide. Ici cette force est celle engendrée par la charge supportée par un demi-essieu.

Comme on peut le voir les deux coussins 11 et 12 sont reliés ensemble par une canalisation 5 elle-même reliée à la chambre de commande d'un correcteur de freinage à commande fluidique 7.

Les coussins fluidiques 11, 12 déterminent chacun une chambre dont le volume peut varier entre une valeur sensiblement nulle et une valeur déterminée maximale, et le circuit fluidique est empli d'un volume de fluide tel que lorsque le volume d'une de ces chambre est sensiblement nul, celui de l'autre chambre est sensiblement égal à la valeur déterminée maximale précitée.

Le circuit fonctionne comme suit :

Comme représenté sur la Figure, supposons les charges appliquées à chacune des roues égales, le véhicule étant à vide. Le volume des deux chambres est donc sensiblement égal à la moitié de la valeur déterminée maximale précitée.

Le véhicule n'étant plus à vide, lorsque la charge appliquée à l'une des roues est supérieure à celle appliquée à l'autre roue, le coussin correspondant s'écrase et le fluide passe de l'autre côté. Il en résulte que l'une des chambres a un volume nul ou sensiblement nul, tandis que celui de l'autre chambre atteint une valeur maximale déterminée par la charge supportée par la roue recevant la charge la plus légère.

Du côté où la chambre a un volume sensiblement nul, l'effort créé par la charge s'exerce directement sur la partie inférieure fixe du capteur par liaison mécanique directe, et n'a pas d'influence sur la pression du fluide.

Du côté où la chambre présente un volume sensiblement maximal, le coussin fluidique s'interpose totalement entre la partie mobile et la partie fixe de ce capteur. Ainsi, la pression du fluide est déterminée entièrement par le rapport de cet effort à la surface effective de ce capteur.

Lors de variations de charge sur les demi-essieus arrière les pressions évoluent vers leurs nouvelles valeurs d'équilibre. Dans la période transitoire, les valeurs instantanées sont fonction des pertes de charge dans la liaison entre les deux capteurs.

Pour éviter que le correcteur soit soumis aux variations rapides de pression, dues par exemple à des chocs transmis par les éléments de suspension, des restrictions 21,22 sont disposées favorablement entre chacun des capteurs et le point de jonction entre les capteurs et le correcteur.

Dans un autre mode de réalisation, l'amortissement de ces variations rapides de pression est obtenue par une restriction 26 disposée entre le correcteur et le point de jonction des capteurs.

Selon un exemple de réalisation, on utilise un coussin fluidique d'une hauteur de 3 mm environ de manière à ne pas amplifier sensiblement la gite du véhicule en cas de déséquilibre dans la répartition des charges à l'intérieur du véhicule.

## Revendications

1. Circuit de commande d'un correcteur de freinage à commande fluidique en fonction de la charge d'un véhicule comportant au moins deux roues pourvues chacune d'un élément de suspension (1, 2), chaque élément de suspension (1, 2) coopèrant avec un capteur de pression fluidique (11, 12), les capteurs de pression (11, 12) étant reliés entre eux et à la chambre de commande du correcteur (7), à commande fluidique, caractérisé en ce que chacun desdits capteur (11, 12) comporte une chambre à volume variable entre une valeur sensiblement nulle et une valeur déterminée maximale, et en ce que le circuit fluidique incluant les capteurs et le correcteur est empli d'un volume de fluide tel que le volume de la chambre à volume variable de l'un des capteurs soit sensiblement à ladite valeur déterminée maximale lorsque celui des autres capteurs est sensiblement nul, de manière à commander ledit correcteur (7) en fonction de la charge supportée par l'une seulement des roues, celle-ci étant celle supportant la charge la plus légère.

2. Circuit de commande d'un correcteur de freinage selon la revendication 1, caractérisé en ce qu'une restriction (21, 22) est disposée entre chacun desdits capteurs (11, 12) et le point de jonction des capteurs et du correcteur (7).

3. Circuit de commande d'un correcteur de freinage selon la revendication 1 ou 2, caractérisé en ce qu'une restriction (26) est disposée entre le point de jonction des capteurs et le correcteur.

## Claims

1. Circuit controlling a fluidically controlled brake regulator in dependence on the load of a vehicle having at least two wheels each provided with a suspension member (1, 2), each suspension member (1, 2) cooperating with a fluidic pressure sensor (11, 12), the pressure sensors (11, 12) being connected to one another and to the chamber controlling the fluidically controlled regulator (7), characterized in that each of said sensor [sic] (11, 12) comprises a chamber whose volume is variable between a substantially zero value and a determined maximum value, and in that the fluidic circuit containing the sensors and the regulator is filled with a volume of fluid such that the volume of the variable-volume chamber of one of the sensors is substantially at said determined maximum value when that of the other sensors is substantially zero to control said regulator (7) in dependence on the load carried by only one of the wheels, namely the wheel carrying the lighter load.

2. Circuit controlling a brake regulator according to Claim 1, characterized in that a restriction means (21, 22) is disposed between each of said sensors (11, 12) and the junction point of the sensors and the regulator (7).

3. Circuit controlling a brake regulator according to Claim 1 or 2, characterized in that a restriction means (26) is disposed between the junction point of the sensors and the regulator.

## Patentansprüche

1. Steuerkreis für einen fluidisch in Abhängigkeit von der Belastung eines wenigstens zwei Räder aufweisenden Fährzeugs gesteuerten Bremsregler, wobei jedes Rad mit wenigstens einem Aufhängungselement (1, 2) versehen ist und jedes Aufhängungselement (1, 2) mit einem Fluiddruckfühler (11, 12) so zusammenarbeitet, wobei die Druckfühler (11, 12) miteinander und mit der Kammer des fluidisch gesteuerten Reglers (7) verbunden sind, dadurch gekennzeichnet, daß jeder der Fühler (11, 12) eine Kammer mit einem zwischen einem im wesentlichen Null entsprechenden Wert und einem vorbestimmten Maximalwert veränderlichen Volumen enthält und daß der Fluidkreis, der die Fühler und den Regler enthält, mit einem solchen Fluidvolumen gefüllt ist, daß das Volumen der Kammer mit variablem Volumen eines der Fühler im wesentlichen den vorbestimmten Maximalwert hat, während das der anderen Fühler im wesentlichen Null ist, so daß der Regler (7) abhängig von der von einem einzigen der Räder getragenen Belastung gesteuert wird, wobei es sich um dasjenige handelt, das die leichteste Belastung trägt.

2. Steuerkreis eines Bremsreglers nach Anspruch 1, dadurch gekennzeichnet, daß zwischen jedem der Fühler (11, 12) und dem Verbindungspunkt der Fühler mit dem Regler (7) eine Drosselstelle (21, 22) eingefügt ist.

3. Steuerkreis eines Bremsreglers nach Anspruch 1 oder 2, dadurch gekennzeichnet, daß zwischen dem Verbindungspunkt der Fühler und dem Regler eine Drosselstelle (26) eingefügt ist.
